# EUROPEAN PATENT SPECIFICATION

(11) **EP 3 536 142 B1**
(45) Date of publication and mention of the grant of the patent: **10.05.2023**
(21) Application number: 18159858.2
(22) Date of filing: 05.03.2018
(51) Int. Cl.: A01D 45/02

(54) **PICKING ROLLER AND FRONT ATTACHMENT FOR HARVESTING STALKY CROPS**
PFLÜCKWALZE UND VORSATZGERÄT ZUM ERNTEN VON STÄNGELARTIGEM ERNTEGUT
ROULEAU DE RAMASSAGE ET FIXATION AVANT DE RÉCOLTE DE CULTURES À TIGES

(43) Date of publication of application: 11.09.2019
(73) Proprietor: CLAAS Selbstfahrende Erntemaschinen GmbH, 33428 Harsewinkel (DE)
(72) Inventor: Stelzle, Michael, OMAHA, NE Nebraska NE 68138 (US)
(74) Representative: CLAAS Gruppe

(56) References cited:
- EP-A1- 0 341 528
- EP-A1- 0 355 441
- EP-A1- 1 417 877
- WO-A1-2016/118659
- DE-U1- 8 600 113

## Description

The present invention relates to to a front attachment for harvesting stalky crops according to the preamble of claim 1.

Front attachments for harvesting stalky crops are used in agricultural harvesting technology in order to separate the seed heads of plants from the remaining parts of the plants. Such front attachments generally comprise at least one picking unit with two picking rollers arranged adjacent to one another, between which the plant stalk is drawn in. The picking rollers pull the plant through a picking gap whose dimensions are narrower than those of the seed head. Because of this, the seed head, for example a corn cob is separated from the remainder of the plant and can be separately processed by feeding the seed heads to a harvesting machine which carries and drives the front attachment. The picking rollers are provided with crop treatment elements which extend over their length in sections. The crop treatment elements are arranged on a tubular roller body. The crop treatment elements extend coaxially to the longitudinal axis of the picking roller. Furthermore, such front attachments are frequently embodied with a shredding device which comprises rotating knives in a horizontal plane below the picking rollers. The shredding device serves for chopping the plant stalks in order to favour the process of decomposition.

From US 2007/0193241 a picking roller for a front attachment for harvesting stalky crops is known, which comprises a roller body with crop treatment elements arranged distributed over the circumference. The crop treatment elements extend coaxially to the longitudinal axis of the picking roller. The front attachment for harvesting stalky crops comprises multiple picking devices which comprises a picking gap formed from two spaced picking plates and picking rollers which are arranged in pairs below the picking gap and are driven in opposite directions.

From US 7,788,890 B2 a picking roller is known, which is embodied with a helical inlet section for crop acceptance and a roller body following thereon with crop treatment elements that are distributed about its circumference and protrude in the radial direction. The crop treatment elements are formed on the roller body as blades with cutting edges running axially parallel to the axis of rotation of the picking roller. Additionally, radial blades extending perpendicularly to the surface of the axial blades are arranged on these. The radial blades are arranged one behind the other in the longitudinal direction of the picking roller. Each two of these picking rollers are part of a picking unit of a front attachment for harvesting stalky crops. The arrangement and spacing of the two picking rollers relative to one another is selected in such a manner that the radial blades of the picking rollers rotating in opposite directions overlap or engage into one another in sections.

From WO 2016/118659 A1 a picking roller is known, with a helical inlet section for crop acceptance and a roller body following thereon with crop treatment elements that are distributed over its circumference and protrude in the radial direction. The crop treatment elements are formed as segments running axially parallel to the longitudinal axis and extending radially to the outside, the outer longitudinal edges of which are profiled. The arrangement and spacing of the two picking rollers on a picking unit of a front attachment relative to one another is selected in such a manner that the profiled outer longitudinal edges of the picking rollers rotating in opposite directions overlap one another in sections. Another type of picking roller is known from EP0341528A1.

The picking rollers known from the abovementioned publications have in common that these require an overlapping arrangement of their crop treatment elements in order to be able to draw in the plant stalks.

In the case of the picking rollers mentioned above, longitudinally extending intermediate spaces between the crop treatment elements form because of their overlapping arrangement of the crop treatment elements. This can result in that parts of the plant stalks, together with the seed heads, reach the downstream harvesting machine along these intermediate spaces. This increases the proportion of non-grain components that have to be processed by the harvesting machine. This has a disadvantageous effect on the crop throughput. A further aspect, in particular in the case when stalk material is still green and/or there is tall weed growth, is that such intermediate spaces are more susceptible to material getting stuck or to clogging. Intermediate spaces running in the longitudinal direction also result in that dry stalk material breaks off above the picking rollers and thus enters the downstream harvesting machine which has a negative effect on the crop throughput of the harvesting machine. Overlapping of the crop treatment elements furthermore results in that the plant stalks are moved more vigorously to and fro as a result of which the seed heads can be detached from the plant stalk before these can be stripped off by the picking plates. The consequence of this is an increase of the crop losses.

The object of the present invention is to further develop a picking roller and a front attachment for harvesting stalky crops of the type mentioned at the outset, which avoids the disadvantages of the prior art and is characterized in particular by a more efficient and more intensive chopping of the plant stalks.

This object is solved through a front attachment for harvesting stalk crops according to Patent claim 1.

Advantageous further developments are subject of the subclaims.

According to claim 1, a front attachment for harvesting seed heads of stalky crops with at least one picking unit with two picking rollers arranged adjacent to one another, between which a plant stalk is drawn in is proposed. The picking roller comprises a helical inlet section for crop acceptance and a roller body following thereon with crop treatment elements distributed over its circumference and protruding in the radial direction. In order to achieve a more efficient and more intensive chopping of the plant stalks it is provided that a respective crop treatment element is formed as drivers arranged one behind the other in the longitudinal direction of the roller body, wherein a following driver, relative to a preceding driver of the crop treatment element, has an offset in the circumferential direction of the roller body so that a spiral-shaped structure of the drivers materialises and that between drivers arranged adjacently in the circumferential direction a continuous, spiral-shaped gap is formed in the longitudinal direction of the picking roller. Through the spiral-shaped structure or arrangement of the drivers, continuous gaps or intermediate spaces running in the longitudinal direction such as occur with the prior art are avoided with picking rollers that are arranged in pairs and rotate in opposite directions. Through the offset arrangement of the drivers, better shearing effects can be achieved as a result of which the grinding of the plant stalks is favoured. Because of the spiral-shaped structure or arrangement of the drivers, the drivers of picking rollers arranged adjacent to one another are arranged relative to one another so that a clear passage gap materialises in the longitudinal direction between the picking rollers. Circumferential end faces of the drivers facing one another of the picking rollers rotating in opposite directions face one another with a minor spacing as a result of which an aggressive grinding and copping of the plant stalks is achieved. This results in a further advantage of the picking rollers according to the invention. The dependency of additional shredding devices for chopping plant stalks which are arranged below the picking rollers can be avoided or at least reduced. This is advantageous when the stalking crop is to be planted after a harvest without prior soil cultivation. In this case, the plant stalks have to be chopped particularly small in order to favour or accelerate the process of the decomposition of the chopped plant stalks.

Preferably, the drivers of the crop treatment elements distributed about the circumference of the roller body can be arranged equidistantly to one another in the circumferential direction at least along a longitudinal section of the roller body. The symmetry of the arrangement of the drivers in the circumferential direction connected with this is advantageous during the manufacture of the picking roller. In particular, the number of drivers in a transition region after the helical inlet section can be smaller than a section of the picking roller following thereon. The number of drivers reduced in the transition region can improve the crop acceptance between the picking rollers.

According to a preferred further development, the drivers that are arranged one behind the other in the longitudinal direction of the roller body can have different cross-sectional shapes in sections. By selecting the different cross-sectional shapes of the drivers, sections in the longitudinal directions of the picking rollers can be realised in which greater compression and crushing of the plant stalks occurs and sections in which cutting of the plant stalks increasingly occurs.

Here, the drivers can have at least partly a substantially quadrangular cross section. This cross-sectional shape favours the compressing or grinding of the plant stalks.

Furthermore, a part of the drivers can have a substantially triangular cross section. This cross-sectional shape of the drivers favours the cutting or shredding of the plant stalks.

In particular, an alternating arrangement of drivers with different cross sections is provided in the longitudinal direction of the picking rollers. This alternating arrangement can be symmetrical or asymmetrical.

In particular, the roller body can be formed from individual driver elements provided with drivers. To this end, individual disc-shaped driver elements can be joined to form a roller body of the picking roller in that these are arranged one behind the other in the longitudinal direction of the picking roller. The individual driver elements can be replaced when required which makes possible a simple adaptation to different peripheral conditions during harvesting. In particular, the offset in the circumferential direction can be varied with respect to the longitudinal axis of the picking roller in order to optimise the cutting and crushing or compressing. The energy required for driving the picking rollers can thereby be optimised as well. Furthermore, the exchangeability of the driver elements makes possible using driver elements consisting of different materials so that it is possible to react to different wear conditions during harvesting. The disc-shaped driver elements can be produced for example by precision punching or laser cutting from heat-treated steel plates or as castings for example from bainitic cast iron (austempered ductile iron).

Furthermore, it is conceivable that the auger-shaped inlet section is detachable mounted on a shaft carrying the driver elements. By means of that detachable assembly of the inlet section the driver elements could be put on or removed from the front end of the respective picking roller. This is in particular advantageous in case driver elements, arranged in a front-end area of the picking rollers, have to be replace to due wear effects since a removal of the respective picking roller is not necessary.

Alternatively, the roller body provided with drivers can be formed as a one-piece component. The roller body formed as a one-piece component can then be produced by means of a casting method. Because of this, a weight reduction and a reduction of the number of components can be achieved.

Furthermore, the roller body can have a substantially constant outer diameter in the longitudinal direction. This means that the circumscribed circle described by the rotating drivers constant in the longitudinal direction of the picking roller.

In particular, the roller body can have an increasing outer diameter in the longitudinal direction at least in sections. Here it can be provided that the outer diameter increases merely in a transition region after the helical inlet section in the longitudinal direction and remains constant thereafter. However it is also conceivable that the outer diameter increases over the entire length of the picking roller.

It is advantageous, furthermore that the number and/or the offset of the drivers can additionally vary in the longitudinal direction of the roller body. This can be realised regardless of whether the roller body is constructed from individual driver elements or embodied in one piece. Because of this, the effect of the drivers on the plant stalks can be influenced. Accordingly, the effect of the cutting or shredding or of the grinding can be more greatly weighted depending on the configuration, number and/or offset in the arrangement of the drivers. Furthermore, the object set at the outset is solved by a front attachment according to claim 11.

Advantageously , a front attachment for harvesting stalky crops is provided, with at least one picking unit, comprising a picking gap formed of two picking plates arranged spaced and picking rollers driven in opposite directions that are arranged in pairs below the picking gap.

Such a front attachment has the advantage that the plant stalks can be cut into preferably short pieces. Using such a front attachment is advantageous in particular when harvesting biotechnologically treated maize plants (biotechnology maize) that have hard, robust stalks which for the decomposition on the ground of the field therefore take more time than conventional maize plants. Because of the more intensive crushing or grinding of the plant stalks more openings are formed in the stalk which favours a quicker decomposition. This is necessary in particular when additional soil cultivation measures are to be avoided before renewed sowing. In addition, the necessity of an additional shredding device can be entirely avoided under certain conditions through the more efficient picking rollers, as a result of which the complexity of the front attachment is reduced or at least a more energy-saving operation of the additional shredding device can be achieved since the plant stalks have already been subjected to a suitable conditioning by the picking rollers according to the invention.

In particular, drivers of adjacent picking rollers of a picking unit are arranged relative to one another so that a clear passage gap materialises in the longitudinal direction of the picking rollers. Because of this arrangement, the drivers of the adjacent picking rollers following a spiral course do not engage into one another as is the case with the crop treatment elements according to the prior art. On the contrary, individual drivers with their circumferential front faces face one another as a function of the position of the picking rollers rotating in opposite directions. Here, they are spaced from one another by the clear passage gap.

Preferentially, a gearing can be provided on each picking unit with which shafts, on which in each case individual driver elements are mounted for forming a roller body of the picking roller, can be drive-connected.

It can be provided, furthermore, that on each picking unit a gearing is provided, with which two roller bodies can be drive-connected, which are embodied as one-piece components. The present invention is explained in more detail in the following by way of an exemplary embodiment presented in the drawings.

It shows:
- Fig. 1: a schematic lateral view of a picking unit for harvesting stalky crops;
- Fig. 2: a perspective view of a picking roller;
- Fig. 3: an arrangement in pairs of picking roller according to Fig. 2 in a view from the front;
- Fig. 4: a second exemplary embodiment of a picking roller in a part view from the top;
- Fig. 5: a part view of a third exemplary embodiment of a picking roller obliquely from the front.

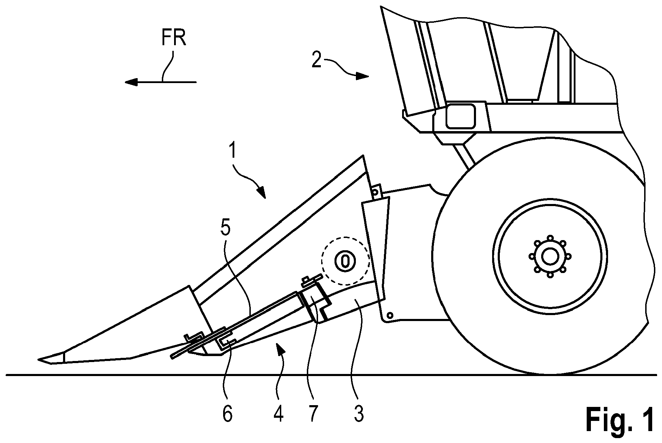

The depiction in Fig. 1 schematically shows a front attachment designed as picking device 1 for harvesting stalky crops, in particular maize or the like, which in its rearward region is arranged on a carrier vehicle 2 which is not shown in more detail, preferentially a combine harvester. The picking device 1 comprises a frame unit 3 on which at least one picking unit 4 is arranged. The picking unit 4, in its front region, seen in travelling direction FR, has picking plates 5 arranged in pairs, between which a picking gap is formed. Below the picking plates 5 cylindrical picking rollers 6 embodied in one or multiple parts are arranged in pairs. The picking rollers 6 comprise protruding crop treatment elements arranged distributed over the circumference. By driving the picking rollers 6 in opposite directions, crop stalks gripped by the protruding harvest treatment elements of the picking rollers 6 is pulled in downwards in the vertical direction, wherein in the region of the picking gap of the picking unit 4 the seed heads of the stalky crop stalks of the crops are severed. Driving the picking rollers 6 of a picking unit 4 in opposite directions is effected by means of a gearing 7.

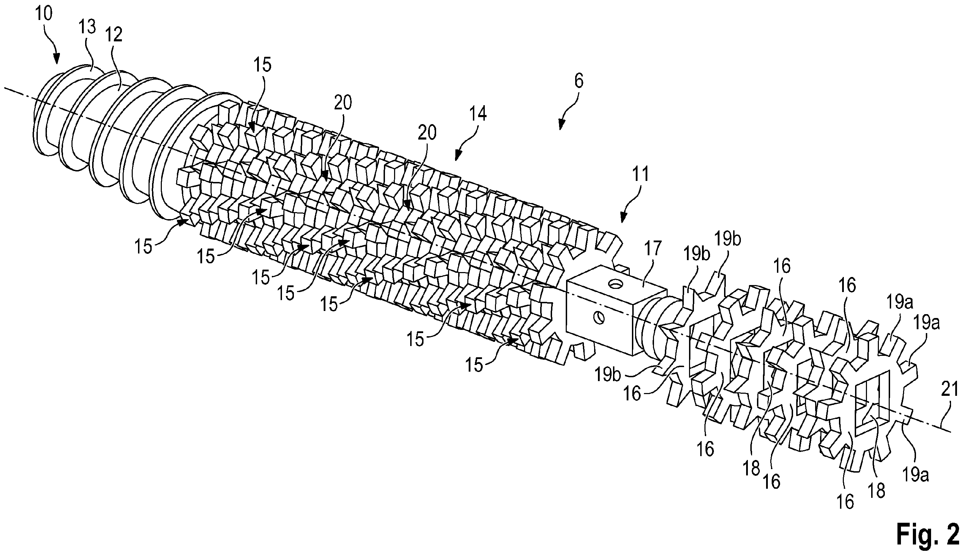

Fig. 2 shows a perspective view of a picking roller 6 according to the invention. With respect to the flow direction of the crop, the picking roller 6 has a front end 10 and a rear end 11. The front end 10 is formed by a helical inlet section 12 which serves for drawing in the stalky crop. To this end, the inlet section 12 comprises a coil which serves for receiving and introducing the crop between the picking rollers 6. The inlet section 12 is followed by a roller body 14 which is provided with protruding crop treatment elements 15 arranged distributed over its circumference. According to the exemplary embodiment shown in Fig. 2, the crop treatment elements 15 are embodied as a plurality of driver elements 16 arranged one behind the other. The driver elements 16 are non-rotatably arranged on a shaft 17. The shaft 17 can be drive-connected to the gearing 7. In the region in front of the rear end 11, individual driver elements 16 are shown before the same are non-rotatably arranged on the shaft 17.

The individual driver elements 16 are designed disc-shaped. The outer contour of the driver elements 16 corresponds to that of a gear wheel. The driver elements 16 each have a through-bore 18 which corresponds with the contour of the shaft 17. Thus, the driver elements 16 can be pushed onto the shaft 17 in a positively locked manner. The shown non-rotational fastening of the driver elements 16 serves only as an example. The through-bores 18 of the driver elements 16 and the shaft 17 can have other polygonal cross sections or even round cross sections. It is also conceivable to do without a shaft in that the driver elements 16 themselves are non-rotatably connected to one another.

Furthermore, it is conceivable that the auger-shaped inlet section 12 is detachable mounted on the shaft 17 so that the driver elements 16 could be put on or removed from the front end 10 of the respective picking roller 6. This is in particular an advantage in case driver elements 16, arranged in a front-end area of the picking rollers 6, have to be replace to due wear effects since a removal of the respective picking roller 6 is not necessary.

D rivers 19a, 19b which are equidistantly spaced from one another are arranged. on the circumference of the respective driver elements 16. The drivers 19a, 19b differ from one another in terms of their cross-sectional shape. Accordingly, the drivers 19a have a substantially quadrangular cross section. The drivers 19b have a substantially triangular cross section. The different cross-sectional shape of the drivers 19a, 19b results from the respective function assigned to the drivers 19a and 19b, which will still be explained further down below. The outer contour of the disc-shaped driver elements 16 approximately corresponds to that of a gear wheel.

The arrangement of the driver elements 16 on the shaft 17 is selected in such a manner that seen in the longitudinal direction of the picking roller 6, starting out from the front end 10, a following driver 19a, 19b has an offset in the circumferential direction of the roller body 14 relative to a preceding driver 19a, 19b. The offset is selected in such a manner that in longitudinal direction of the picking roller 6 a spiral-shaped structure of the drivers 19a, 19b located one behind the other materialises. Here, overlapping of two drivers 19a, 19b each located in the longitudinal direction one behind the other is provided at least in sections. Accordingly, a spiral-shaped gap 20 that is continuous in the longitudinal direction of the picking roller 6 is formed between the respective drivers 19a, 19b of the driver elements 16 arranged one behind the other and adjacent in the circumferential direction.

The drivers 19a have a substantially quadrangular cross section. The drivers 19b have a substantially triangular cross section. Driver elements 16, the drivers 19a of which have a substantially quadrangular cross section serve for crushing or grinding a plant stalk while it is being pulled through the picking gap. The drivers 19b with their substantially triangular cross section serve for cutting the plant stalks into multiple shorter stalk sections. By varying the number of the elements 16 provided with differently configured drivers 19a, 19b the effect of the drivers on the plant stalks can be influenced. Accordingly, the effect of the cutting or shredding or of the grinding can be more greatly weighted depending on configuration, number and/or offset in the arrangement of the drivers 19a, 19b.

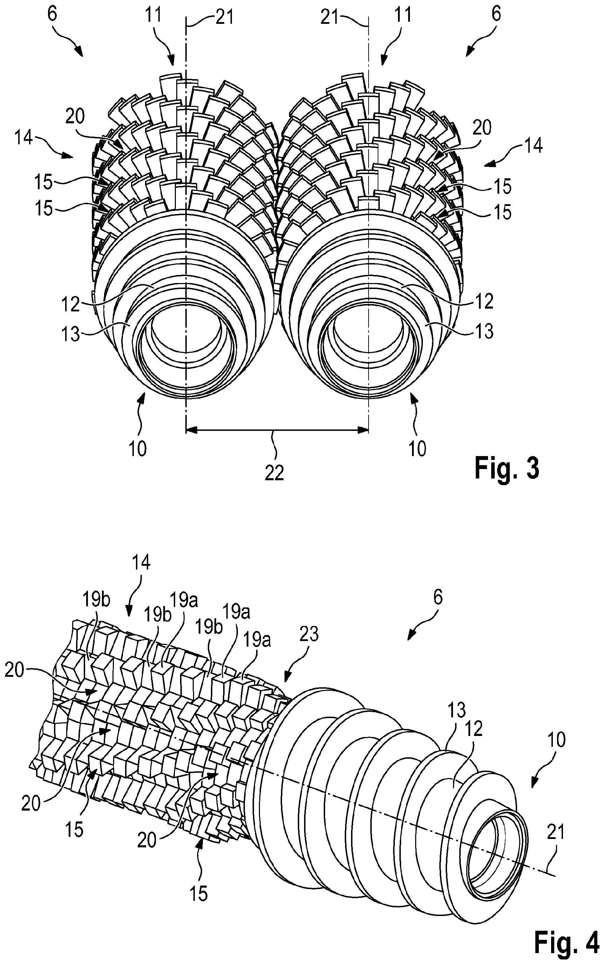

The depiction in Fig. 3 shows an arrangement of the picking rollers 6 in pairs according to Fig. 2 in a view from the front. The spiral-shaped arrangement of the drivers 19a, 19b which are arranged in the longitudinal direction of the picking rollers 6 one behind the other is clearly evident. based on their longitudinal axes 21, The two picking rollers 6 have a spacing 22 that is selected so that front faces of the drivers 19a, 19b located opposite one another in pairs facing one another do not touch or engage or overlap one another. The outer diameter of the roller bodies 14 or the circumscribed circle of the driver elements 19a, 19b is constant over the entire longitudinal extent of the crop treatment elements 15.

In Fig. 4, a second exemplary embodiment of the picking roller 6 is shown in a part view from above. The same reference numbers were used for identical components. This exemplary embodiment differs in that in a transition region 23 behind the inlet section 12 the drivers 19a of the different driver elements 16 have different outer diameters. The outer diameter of the driver elements 16 arranged one behind the other increases in the longitudinal direction of the picking roller 6. For this purpose, the extent of the drivers 19a of a driver element 16 changes in the radial direction. Following this transition region 23, the following driver elements 16 have a constant outer diameter. The conical profile of the driver elements 16 and the drivers 19 respectively has an advantageous effect on the picking up and threading in of the plant stalks between the picking rollers 6.

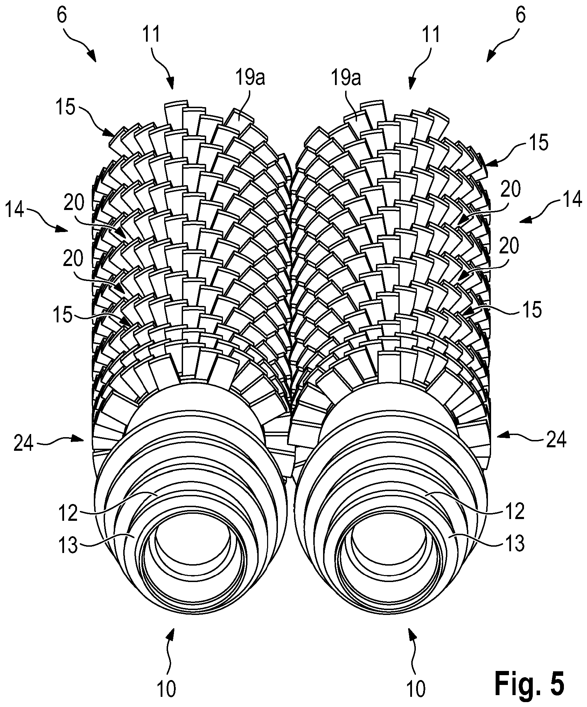

In Fig. 5, a third exemplary embodiment of the picking roller 6 is shown. The roller body 14 likewise has a constant outer diameter over the entire longitudinal extent of the crop treatment elements 15. In order to improve the crop acceptance it is provided according to this embodiment to reduce the number of drivers 19a of the driver elements 16 behind the inlet section 12 in a transition region 24.

The embodiments of the picking rollers 6 described above can also comprise roller bodies embodied in one piece. For this purpose, the roller bodies of the picking rollers 6 embodied as one-piece component can be produced by means of a casting method.

### Reference list

- 1: Picking device
- 2: Carrier vehicle
- 3: Frame unit
- 4: Picking unit
- 5: Picking plates
- 6: Picking rollers
- 7: Gearing
- FR: Travelling direction

- 10: Front end of 6
- 11: Rear end of 6
- 12: Inlet section
- 13: Coil
- 14: Roller body
- 15: Crop treatment element
- 16: Driver element
- 17: Shaft
- 18: Through-bore
- 19a: Driver
- 19b: Driver
- 20: Gap
- 21: Longitudinal axis
- 22: Spacing
- 23: Transition region
- 24: Transition region

## Claims

1. A front attachment (1) for harvesting fruit heads of stalky crops with at least one picking unit with two picking rollers (6) arranged adjacent to one another, between which a plant stalk is drawn in, with a helical inlet section (12) for accepting crops and a roller body (14) following thereon with crop treatment elements (15) protruding in the radial direction distributed over its circumference which extend in the longitudinal direction of the roller body (14) in sections, **characterized in that** a respective crop treatment element (15) is formed as drivers (19a, 19b) arranged in the longitudinal direction of the roller body (14) one behind the other, wherein a following driver (19a, 19b) relative to a preceding driver (19a, 19b) of the crop treatment element (15) has an offset in the circumferential direction of the roller body (14), so that a spiral-shaped structure of the arrangement of the drivers (19a, 19b) materialises, and **in that** between drivers (19a, 19b) arranged adjacent in the circumferential direction a spiral-shaped gap (20) that is continuous in the longitudinal direction of the picking roller (6) is formed.

2. The front attachment (1) according to claim 1, **characterized in that** the drivers (19a, 19b) of the crop treatment elements (15) distributed over the circumference of the roller body (14) are equidistantly arranged in the circumferential direction at least along a longitudinal section of the roller body (14).

3. The front attachment (1) according to claim 1 or 2, **characterized in that** the drivers (19a, 19b) arranged one behind the other in the longitudinal direction of the roller body (14) have different cross-sectional shapes in sections.

4. The front attachment (1) according to claim 3, **characterized in that** the drivers (19a) have at least partly a substantially quadrangular cross section.

5. The front attachment (1) according to claim 3 or 4, **characterized in that** a part of the drivers (19b) has a substantially triangular cross section.

6. The front attachment (1) according to any one of the preceding claims, **characterized in that** the roller body (14) is formed from individual driver elements (16) provided with drivers (19a, 19b).

7. The front attachment (1) according to any one of the preceding claims, **characterized in that** the roller body (14) provided with drivers (19a, 19b) is formed as a one-piece component.

8. The front attachment (1) according to any one of the preceding claims, **characterized in that** the roller body (14) in the longitudinal direction has a substantially constant outer diameter.

9. The front attachment (1) according to any one of the preceding claims, **characterized in that** the roller body (14) in the longitudinal direction has an increasing outer diameter at least in sections.

10. The front attachment (1) according to any one of the preceding claims, **characterized in that** the number and/or the offset of the drivers (19a, 19b) varies in the longitudinal direction of the roller body (14).

11. A front attachment (1) according to any one of the claims 1 to 10,
**characterized in that** it comprises a picking gap formed from two spaced picking plates (5) and picking rollers (6) which are arranged below the picking gap in pairs and are driven in opposite directions.

12. The front attachment (1) according to claim 11, **characterized in that** drivers (19a, 19b) of adjacent picking rollers (6) of a picking unit (4) are arranged relative to one another so that a clear passage gap materialises in the longitudinal direction of the picking rollers (6).

13. The front attachment (1) according to claim 11 or 12, **characterized in that** on each picking unit (4) a gearing (7) is provided, with which shafts (17), of which in each case individual driver elements (16) for forming a roller body (14) of the picking roller (6) are mounted, can be drive-connected.

14. The front attachment (1) according to claim 11 or 12, **characterized in that** on each picking unit (4) a gearing (7) is provided, with which two roller bodies (14) can be drive-connected, which are embodied as one-piece components.

## Patentansprüche

1. Vorsatzgerät (1) zum Ernten von Fruchtständen von stängelartigem Erntegut mit mindestens einer Pflückeinheit mit zwei nebeneinander angeordneten Pflückwalzen (6), zwischen denen ein Pflanzenstängel eingezogen wird, mit einem schraubenförmigen Einlassabschnitt (12) zum Aufnehmen von Erntegut und einem sich daran anschließenden Walzenkörper (14) mit in der radialen Richtung vorstehenden, über seinen Umfang verteilten Erntegutbearbeitungselementen (15), welche sich in der Längsrichtung des Walzenkörpers (14) in Abschnitten erstrecken, **dadurch gekennzeichnet, dass** ein jeweiliges Erntegutbearbeitungselement (15) in Form von Mitnehmern (19a, 19b) ausgebildet ist, die in der Längsrichtung des Walzenkörpers (14) hintereinander angeordnet sind, wobei ein nachfolgender Mitnehmer (19a, 19b) bezüglich eines vorausgehenden Mitnehmers (19a, 19b) des Erntegutbearbeitungselements (15) einen Versatz in der Umfangsrichtung des Walzenkörpers (14) aufweist, so dass eine spiralförmige Struktur der Anordnung der Mitnehmer (19a, 19b) entsteht, und dadurch, dass zwischen Mitnehmern (19a, 19b), die in der Umfangsrichtung nebeneinander angeordnet sind, ein spiralförmiger Spalt (20), welcher in der Längsrichtung der Pflückwalze (6) durchgehend ist, gebildet wird.

2. Vorsatzgerät (1) nach Anspruch 1, **dadurch gekennzeichnet, dass** die Mitnehmer (19a, 19b) der über den Umfang des Walzenkörpers (14) verteilten Erntegutbearbeitungselemente (15) wenigstens entlang eines Längsabschnitts des Walzenkörpers (14) in der Umfangsrichtung äquidistant angeordnet sind.

3. Vorsatzgerät (1) nach Anspruch 1 oder 2, **dadurch gekennzeichnet, dass** die Mitnehmer (19a, 19b), die in der Längsrichtung des Walzenkörpers (14) hintereinander angeordnet sind, in Abschnitten unterschiedliche Querschnittsformen aufweisen.

4. Vorsatzgerät (1) nach Anspruch 3, **dadurch gekennzeichnet, dass** die Mitnehmer (19a) wenigstens zum Teil einen im Wesentlichen viereckigen Querschnitt aufweisen.

5. Vorsatzgerät (1) nach Anspruch 3 oder 4, **dadurch gekennzeichnet, dass** ein Teil der Mitnehmer (19b) einen im Wesentlichen dreieckigen Querschnitt aufweist.

6. Vorsatzgerät (1) nach einem der vorhergehenden Ansprüche, **dadurch gekennzeichnet, dass** der Walzenkörper (14) von einzelnen Mitnehmerelementen (16) gebildet wird, die mit Mitnehmern (19a, 19b) versehen sind.

7. Vorsatzgerät (1) nach einem der vorhergehenden Ansprüche, **dadurch gekennzeichnet, dass** der mit Mitnehmern (19a, 19b) versehene Walzenkörper (14) als eine einteilige Komponente ausgebildet ist.

8. Vorsatzgerät (1) nach einem der vorhergehenden Ansprüche, **dadurch gekennzeichnet, dass** der Walzenkörper (14) in der Längsrichtung einen im Wesentlichen konstanten Außendurchmesser aufweist.

9. Vorsatzgerät (1) nach einem der vorhergehenden Ansprüche, **dadurch gekennzeichnet, dass** der Walzenkörper (14) in der Längsrichtung wenigstens in Abschnitten einen zunehmenden Außendurchmesser aufweist.

10. Vorsatzgerät (1) nach einem der vorhergehenden Ansprüche, **dadurch gekennzeichnet, dass** die Anzahl und/oder der Versatz der Mitnehmer (19a, 19b) in der Längsrichtung des Walzenkörpers (14) variieren.

11. Vorsatzgerät (1) nach einem der Ansprüche 1 bis 10, **dadurch gekennzeichnet, dass** es einen Pflückspalt, der von zwei beabstandeten Pflückplatten (5) gebildet wird, und Pflückwalzen (6), welche paarweise unterhalb des Pflückspaltes angeordnet sind und in entgegengesetzten Richtungen angetrieben werden, umfasst.

12. Vorsatzgerät (1) nach Anspruch 11, **dadurch gekennzeichnet, dass** Mitnehmer (19a, 19b) benachbarter Pflückwalzen (6) einer Pflückeinheit (4) relativ zueinander so angeordnet sind, dass ein freier Durchgangsspalt in der Längsrichtung der Pflückwalzen (6) entsteht.

13. Vorsatzgerät (1) nach Anspruch 11 oder 12, **dadurch gekennzeichnet, dass** an jeder Pflückeinheit (4) ein Rädergetriebe (7) vorgesehen ist, mit welchem Wellen (17), an denen jeweils einzelne Mitnehmerelemente (16) zur Bildung eines Walzenkörpers (14) der Pflückwalze (6) angebracht sind, antriebsverbunden werden können.

14. Vorsatzgerät (1) nach Anspruch 11 oder 12, **dadurch gekennzeichnet, dass** an jeder Pflückeinheit (4) ein Rädergetriebe (7) vorgesehen ist, mit welchem zwei Walzenkörper (14) antriebsverbunden werden können, welche als einteilige Komponenten ausgeführt sind.

## Revendications

1. Un outil frontal (1) pour récolter des infrutescences de cultures en tiges, comprenant au moins une unité de cueillage avec deux rouleaux de cueillage (6) disposés l'un à côté de l'autre, entre lesquels une tige de plante est engagée, comprenant une portion d'entrée hélicoïdale (12) pour recevoir des cultures et, à sa suite, un corps de rouleau (14) avec des éléments de traitement de culture (15) en saillie dans la direction radiale répartis sur sa circonférence, lesquels s'étendent dans la direction longitudinale du corps de rouleau (14) par portions, **caractérisé en ce qu'**un élément de traitement de culture respectif (15) est conformé en entraîneurs (19a, 19b) disposés dans la direction longitudinale du corps de rouleau (14) l'un derrière l'autre, un entraîneur suivant (19a, 19b) par rapport à un entraîneur précédent (19a, 19b) de l'élément de traitement de culture (15) ayant un décalage dans la direction circonférentielle du corps de rouleau (14), ce qui crée une structure spiralée de l'agencement des entraîneurs (19a, 19b), et **en ce qu'**entre des entraîneurs (19a, 19b) disposés adjacents dans la direction circonférentielle, un intervalle spiralé (20) qui est continu dans la direction longitudinale du rouleaux de cueillage (6) est formé.

2. L'outil frontal (1) selon la revendication 1, **caractérisé en ce que** les entraîneurs (19a, 19b) des éléments de traitement de culture (15) répartis sur la circonférence du corps de rouleau (14) sont disposés de manière équidistante dans la direction circonférentielle au moins le long d'une portion longitudinale du corps de rouleau (14) .

3. L'outil frontal (1) selon la revendication 1 ou 2, **caractérisé en ce que** les entraîneurs (19a, 19b) disposés l'un derrière l'autre dans la direction longitudinale du corps de rouleau (14) ont des formes en section transversale différentes dans des portions.

4. L'outil frontal (1) selon la revendication 3, **caractérisé en ce que** les entraîneurs (19a) ont au moins partiellement une section transversale sensiblement quadrangulaire.

5. L'outil frontal (1) selon la revendication 3 ou 4, **caractérisé en ce qu'**une partie des entraîneurs (19b) a une section transversale sensiblement triangulaire.

6. L'outil frontal (1) selon l'une quelconque des revendications précédentes, **caractérisé en ce que** le corps de rouleau (14) est formé à partir d'éléments d'entraîneur individuels (16) munis d'entraîneurs (19a, 19b).

7. L'outil frontal (1) selon l'une quelconque des revendications précédentes, **caractérisé en ce que** le corps de rouleau (14) muni d'entraîneurs (19a, 19b) est conformé en composant d'une seule pièce.

8. L'outil frontal (1) selon l'une quelconque des revendications précédentes, **caractérisé en ce que** le corps de rouleau (14) dans la portion longitudinale a un diamètre extérieur sensiblement constant.

9. L'outil frontal (1) selon l'une quelconque des revendications précédentes, **caractérisé en ce que** le corps de rouleau (14) dans la direction longitudinale a un diamètre extérieur croissant au moins dans des portions.

10. L'outil frontal (1) selon l'une quelconque des revendications précédentes, **caractérisé en ce que** le nombre et/ou le décalage des entraîneurs (19a, 19b) varie dans la direction longitudinale du corps de rouleau (14).

11. Un outil frontal (1) selon l'une quelconque des revendications 1 à 10, **caractérisé en ce qu'**il comprend un intervalle de cueillage formé à partir de deux plaques de cueillage espacées (5) et de rouleaux de cueillage (6) qui sont disposés sous l'intervalle de cueillage et sont entraînés dans des directions opposées.

12. L'outil frontal (1) selon la revendication 11, **caractérisé en ce que** des entraîneurs (19a, 19b) de rouleaux de cueillage adjacents (6) d'une unité de cueillage (4) sont disposés l'un rapport à l'autre de façon qu'un intervalle de passage libre se crée dans la direction longitudinale des rouleaux de cueillage (6).

13. L'outil frontal (1) selon la revendication 11 ou 12, **caractérisé en ce que** sur chaque unité de cueillage (4) est prévu un engrenage (7) avec lequel des arbres (17), sur lesquels dans chaque cas des éléments d'entraîneur individuels (16) pour former un corps de rouleau (14) du rouleaux de cueillage (6) sont montés, peuvent être en liaison motrice.

14. L'outil frontal (1) selon la revendication 11 ou 12, **caractérisé en ce que** sur chaque unité de cueillage (4) est prévu un engrenage (7) avec lequel deux corps de rouleau (14) peuvent être en liaison motrice, lesquels sont conformés en composants d'une seule pièce.
